Europäisches Patentamt

European Patent Office

Office européen des brevets

(19)

(11) Veröffentlichungsnummer: **0 040 699**
**B1**

(12) **EUROPÄISCHE PATENTSCHRIFT**

(45) Veröffentlichungstag der Patentschrift:
14.08.85

(51) Int. Cl.⁴: **A 21 C 1/14,** A 21 C 1/02,
B 01 F 15/02

(21) Anmeldenummer: 81103156.6

(22) Anmeldetag: 28.04.81

(54) Knet- und/oder Mengmaschine.

(30) Priorität: **28.05.80 DE 3020167**

(43) Veröffentlichungstag der Anmeldung:
**02.12.81 Patentblatt 81/48**

(45) Bekanntmachung des Hinweises auf die Patenterteilung:
**14.08.85 Patentblatt 85/33**

(84) Benannte Vertragsstaaten:
**BE FR GB IT NL**

(56) Entgegenhaltungen:
**DE - A - 2 421 720**
**DE - C - 245 931**
**GB - A - 1 511**

(73) Patentinhaber: **Dierks & Söhne GmbH & Co. KG,
Sandbachstrasse 1, D-4500 Osnabrück (DE)**

(72) Erfinder: **Möller, Dieter, Ing.-grad., In der Bornheide 12,
D-4500 Osnabrück (DE)**
Erfinder: **Böert, Konrad, Ing.-grad., Lilienstrasse 9,
D-4512 Wallenhorst 1 (DE)**

(74) Vertreter: **Busse & Busse Patentanwälte,
Postfach 1226 Grosshandelsring 6, D-4500 Osnabrück
(DE)**

**Beschreibung**

Die Erfindung bezieht sich auf eine Knet- und/ oder Mengmaschine für Teig, Nahrungsmittel od.dgl. in einer Ausgestaltung nach dem Oberbegriff des Patentanspruchs 1.

Bei einer bekannten Maschine dieser Art (GB-A-1 511 A.D. 1912) ist der Verschlusskörper um eine Gelenkachse an der Unterseite des Bodens des Bottichs klappbar gelagert und um etwa 180° aus seiner Schliessstellung in die Offenstellung schwenkbar.

Bei einer derartigen Ausbildung sind der Verschlusskörper und der Antrieb für diesen ständig fest mit dem Bottich verbundene Bauteile, die bei Umlauf des Bottichs mit diesem mitbewegt werden. Die Ausbildung des Antriebs für den Verschlusskörper als Handdrehspindel enthebt zwar komplizierter Zuleitungen, wie sie bei pneumatisch, hydraulisch oder elektrisch betätigbarer Antriebsausbildung erforderlich wären, setzt jedoch voraus, dass der Bottich beim Öffnen und beim Schliessen des Verschlusskörpers stillsteht. Insbesondere aber bedingt die reine Schwenkbewegung des Verschlusskörpers Schwierigkeiten beim Öffnen und beim Schliessen, sowie bei der Schaffung einer exakt abdichtenden Einpassung des Verschlusskörpers in den Boden des Bottichs, weil sich der Rand des Verschlusskörpers auf unterschiedlichen, mit dem Abstand zur Schwenkachse vergrössernden Schwenkradien der Öffnung im Bottichboden annähert bzw. sich aus dieser herausbewegt.

Der Erfindung liegt die Aufgabe zugrunde, eine Knet- und/oder Mengmaschine der im Oberbegriff des Patentanspruchs 1 angegebenen Art zu schaffen, die bei einfacher Ausbildung eine gleichförmige im ersten Teil der Öffnungsbewegung und im letzten Teil der Schliessbewegung gradlinige, zur Drehachse des Bottichs parallele Bewegung des Verschlusskörpers ermöglicht, die zudem schnell und unabhängig davon ausführbar ist, ob der Bottich stillsteht oder umläuft.

Hierzu ist die Maschine nach der Erfindung gekennzeichnet durch die im kennzeichnenden Teil des Patentanspruchs 1 angegebenen Merkmale. Hinsichtlich weiterer Ausgestaltungen wird auf die Patentansprüche 2 bis 6 verwiesen. Die erfindungsgemässe Ausgestaltung schafft eine Bewegung für den Verschlusskörper, die zunächst vertikal abwärts verläuft und erst anschliessend in eine überlagerte, abwärts und seitwärts gerichtete Bewegung übergeht. Der Tragarm für den Verschlusskörper kann dabei samt Antrieb am Maschinengestell abgestützt sein, so dass eine Antriebsbetätigung auch während des Bottichumlaufes möglich ist. Darüber hinaus kann der Antrieb auch unschwer an Versorgungsleitungen angeschlossen und dementsprechend motorisch ausgebildet werden. Bei einer solchen Ausgestaltung kann den Bewegungen des Verschlusskörpers ein schneller Bewegungsablauf vermittelt werden, während unschwer eine gefahrlose Fernbetätigung möglich ist.

Ein Ausführungsbeispiel des Gegenstands der Erfindung ist in der Zeichnung näher veranschaulicht, im einzelnen zeigen:

Fig. 1 eine Seitenansicht der erfindungsgemässen Maschine, teilweise im Schnitt,

Fig. 2 eine schematische Draufsicht zu Fig. 1, und

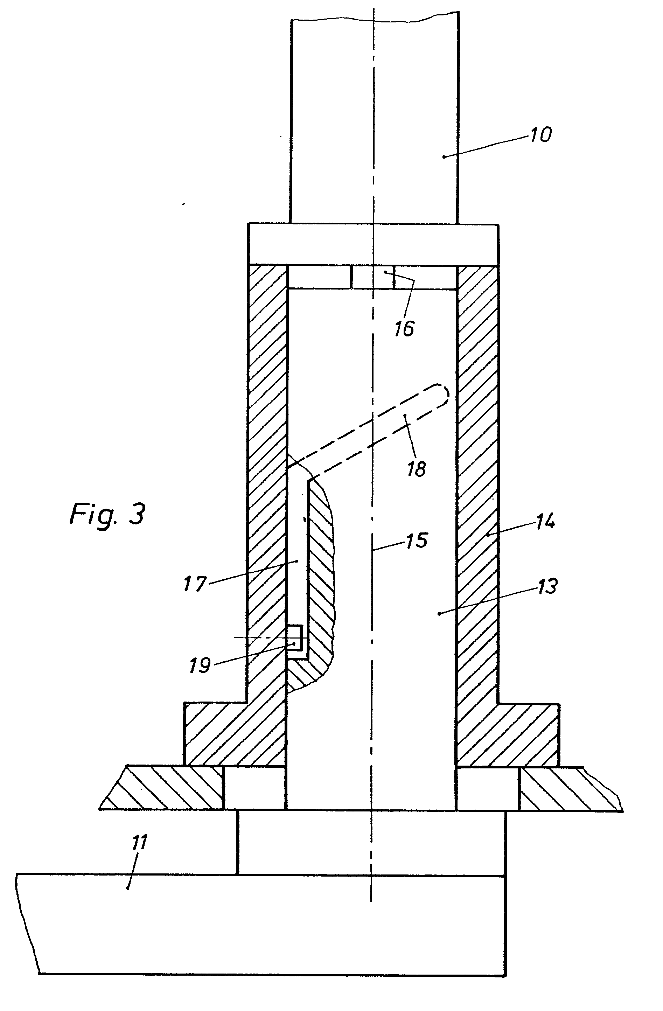

Fig. 3 eine Teilschnittdarstellung des Antriebs, in Vergrösserung.

Die in der Zeichnung wiedergegebene Maschine ist als Spiral-Knetmaschine ausgeführt und umfasst einen um eine vertikale Drehachse 1 mittels eines nicht näher dargestellten Antriebs angetrieben umlaufenden Bottich 2, in den von oben ein Arbeitswerkzeug 3 in Gestalt einer Knetspirale eingreift. Dieses Arbeitswerkzeug 3 ist seinerseits durch einen nicht näher wiedergegebenen Antrieb angetrieben und führt bei dem dargestellten Beispiel eine Umlaufbewegung um eine zur Drehachse 1 des Bottichs 2 parallele Drehachse 4 aus.

Der Bottich 2 liegt mit seinem Boden 5 auf einem die Drehachse 1 des Bottichs 2 in weitem Abstand koaxial umgebenden Lagerring 6 auf und besitzt dementsprechend einen lagerungsfreien Mittelbereich, in dem sich eine grosse, in ihrem Durchmesser etwa dem Innenradius des Bottichs entsprechende, koaxiale Bodenöffnung 7 befindet. Diese Bodenöffnung 7 ist als reine Bodenaussparung gestaltet und weist einen sich nach oben hin verjüngenden kreiskegeligen Öffnungsrand auf.

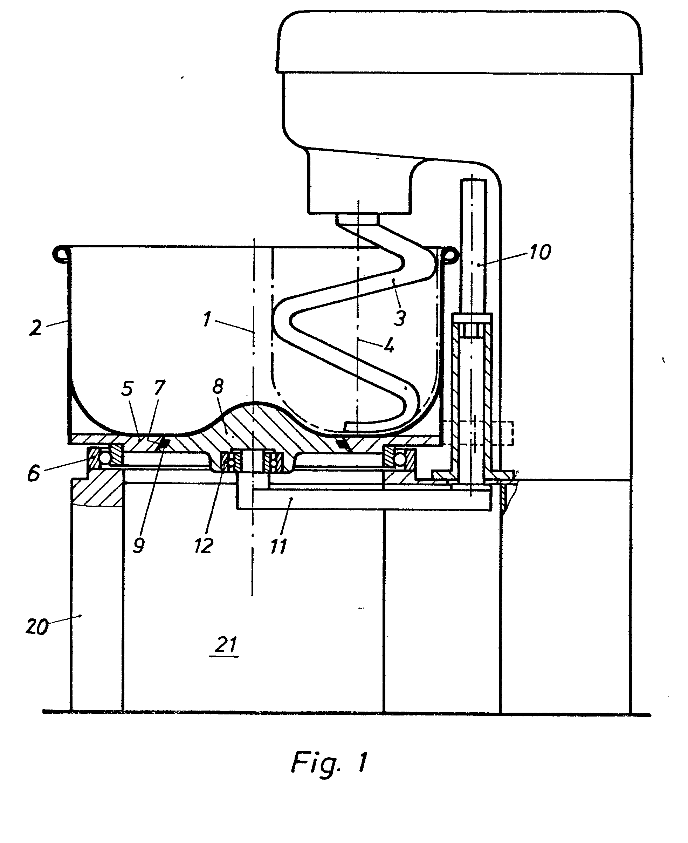

In der Stellung der Teile nach Fig. 1 befindet sich in der Bodenöffnung 7 ein Verschlusskörper 8, der in seiner dargestellten Schliessstellung Teil des Bottichbodens 5 bildet und an seinem ebenfalls kreiskegeligen, sich nach oben hin verjüngenden Aussenrand dichtend in die Bodenöffnung 7 eingepasst ist. Der Verschlusskörper 8 bildet im wesentlichen eine Platte mit flacher Unterseite und weist eine Oberseite auf, welche im Aussenrandbereich bündig in den Bottichboden 5 übergeht. Dabei kann z.B. die Oberseite als Ganzes flach ausgebildet sein, wie dies z.B. bei Wendel-Knetmaschinen oder auch bei Hubknetmaschinen mit Knetarm erwünscht ist. Bei dem dargestellten Beispiel einer Spiral-Knetmaschine ist jedoch die Oberseite des Verschlusskörpers 8 zur Drehachse 1 des Bottichs 2 hin rotationssymmetrisch aufgewölbt und bildet einen zentralen Leitkörper oder Zubringer.

An seinem dem Innenrand der Bodenöffnung 7 in der dargestellten Schliessstellung gegenüberliegenden Aussenrand weist der Verschlusskörper 8 eine Ringnut auf, in der ein umlaufender Dichtungsring 9 untergebracht sein kann.

Der Verschlusskörper 8 ist bei dem dargestellten Ausführungsbeispiel auf einem mittels eines Drehhubantriebes in Gestalt eines Druckmittelzylinders 10 heb- und senkbaren sowie horizontal begrenzt schwenkbaren Tragarm 11 mittels eines Lagers 12 frei drehbar abgestützt, dessen Lagerachse mit der Drehachse 1 des Bottichs 2 zusammenfällt. Dementsprechend kann der Verschlusskörper 8 in seiner Schliessstellung mit dem Bottich 2 umlaufen, während ferner das Lager 12 dem Verschlusskörper 8 eine gewisse Ausgleichsbeweglichkeit relativ zum Tragarm 11 vermittelt, wie sie bei einer Hubbewegung des Verschlusskörpers 8 zu dessen Einführen in die Schliessstellung in der Bodenöffnung 7 passungshalber erwünscht ist.

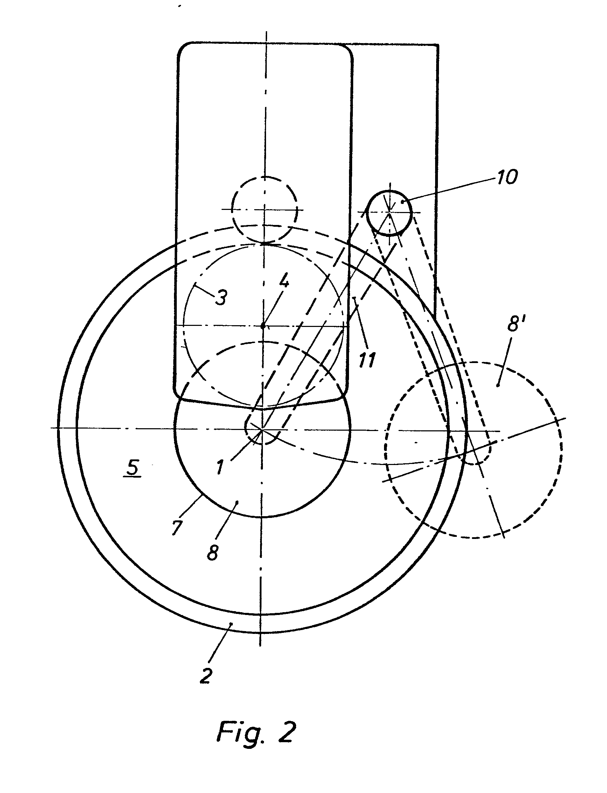

Der Tragarm 11 ist am unteren Ende eines Führungs- und Lagerrohres 13 befestigt, das in einer Lagerbüchse 14 mit vertikaler, zur Drehachse 1 des Bottichs 2 paralleler Mittelachse 15 drehbar und axial verschlieblich gelagert ist. Am oberen Ende dieses Führungs- und Lagerrohres 13 greift die Kolbenstange 16 des Druckmittelzylinders 10 an. In seinem unteren Bereich besitzt das Führungs- und Lagerrohr 13 einen zunächst vertikalen, achsparallelen Schlitz 17, der an seinem oberen Ende in einen schräg ansteigenden Umfangsschlitz 18 übergeht. In diesen Schlitz 17, 18 greift ein innen an der Lagerbüchse 14 festgelegter Ansatz 19, z.B. eine Führungsrolle, ein. Wird nun mittels des Druckmittelzylinders 10 das Führungs- und Lagerrohr 13 und mit diesem der Tragarm 11 und der auf diesem gelagerte Verschlusskörper 8 abwärts bewegt, so verschiebt sich der Ansatz 19 in dem vertikalen, achsparallelen Schlitz 17 und sichert zunächst das Führungs- und Lagerrohr 13 gegen Drehbewegungen. Sobald im Zuge der Abwärtsbewegung der Ansatz 19 in den Schlitz 18 gelangt, erteilt er dem Führungs- und Lagerrohr 13 eine Schwenkbewegung um die Achse 15, so dass während des Endteils der Abwärtsbewegung der Verschlusskörper zugleich aus seiner koaxialen Lage zur Drehachse 1 des Bottichs 2 ausgeschwenkt wird und in eine Endstellung gelangt, in der er die Bodenöffnung 7 nach unten hin völlig freigibt. Dies veranschaulicht die Fig. 2, in der der abgesenkte und ausgeschwenkte Verschlusskörper gestrichelt wiedergegeben und mit 8' bezeichnet ist.

In dieser Offenstellung des Verschlusskörpers 8 kann der fertig bearbeitete Bottichinhalt frei nach unten hin und ohne seitliche Um- oder Ablenkung aus dem Bottich 2 austreten, wobei gleichzeitig der Verschlusskörper z.B. für Inspektions- oder Reinigungsarbeiten gut zugänglich ist. Im Maschinengestell 20 ist unter der Bodenöffnung 7 ein bis in die Standebene der Maschine herabreichender Freiraum 21 belassen, in den ein Behälter eingeschoben bzw. auch ein Förderband eingeführt werden kann. Bei Etagenbetrieb, wie er in Bäckereien häufig anzutreffen ist, kann die ausgetragene Gutmasse auch direkt vertikal nach unten in eine nächstuntere Etage herabfalllen.

Während des Austragens können das Arbeitswerkzeug 3 und der Bottich 2 ihre Arbeitsbewegungen fortsetzen, welche, von oben gesehen, während des Betriebs in gleicher Drehrichtung umlaufen. Zur Verstärkung der Austragwirkung kann jedoch die Drehrichtung des Bottichs 2 umgekehrt werden, so dass eine zur Bottichmitte hin gerichtete verstärkte Austragwirkung entsteht. Dies gilt besonders für Knetspiralen als Arbeitswerkzeuge. Bei Hub-Knetmaschinen und bei Wendel-Knetmaschinen haben die Arbeitswerkzeuge ohnehin einen den Mittelbereich des Bottichs überstreichenden Arbeitsbereich, so dass auch ohne Richtungsumkehr der Drehrichtung des Bottichs 2 eine hinreichende Austragwirkung vorliegt. Grundsätzlich ist es aber denkbar, während des Austragens in den Bottich ein Leitglied od.dgl. einzusetzen, das z.B. in der Art eines Schabers im Bottich 2 enthaltenes Gut der Bodenöffnung 7 zuführt.

**Patentansprüche**

1. Knet- und/oder Mengmaschine für Teig, Nahrungsmittel od.dgl., bestehend aus einem um eine vertikale Drehachse angetrieben umlaufenden Bottich (2), einem in diesen eingreifenden, angetriebenen Arbeitswerkzeug (3) und einer Austragvorrichtung für den fertig bearbeiteten Bottichinhalt mit einem mittels eines Antriebs (10) aus einer Schliessstellung in eine Offenstellung bewegbaren, in dieser eine mittige Bodenöffnung (7) im Bottichboden (5) freigebenden Verschlusskörper (8), der als Teil des Bottichbodens ausgebildet ist und in Schliessstellung an seinem Aussenrand in Dichtungseingriff mit dem Öffnungsrand der Bodenöffnung steht, dadurch gekennzeichnet, dass der Verschlusskörper (8) mittels seines Antriebs (10) vertikal abwärts und anschliessend zusätzlich in eine in Bezug auf die Bodenöffnung überlappungsfreie Endstellung bewegbar ist, wobei der Verschlusskörper (8) auf einem mittels des Antriebs (10) bewegbaren Tragarm (11) mittels eines Lagers (12) frei drehbar abgestützt ist, dessen Lagerachse mit der Drehachse (1) des Bottichs (2) zusammenfällt.

2. Maschine nach Anspruch 1, dadurch gekennzeichnet, dass der Tragarm 11 am unteren Ende eines ortsfesten Drehhubantriebes mit vertikaler, ausserhalb des Behälters (2) gelegener Drehachse (15) angebracht ist.

3. Maschine nach Anspruch 1 oder 2, dadurch gekennzeichnet, dass als Arbeitswerkzeug (3) in an sich bekannter Weise eine um eine vertikale, zur Drehachse (1) des Bottichs (2) parallele Drehachse (4) umlaufende Spirale vorgesehen und der Bottichantrieb zur Drehrichtungsumkehr der Bottichumlaufbewegung umsteuerbar ist.

4. Maschine nach einem oder mehreren der Ansprüche 1 bis 3, dadurch gekennzeichnet, dass der Bottich (2) im Bereich seines Bodens (5) auf einem die Bodenöffnung (7) im Abstand umgebenden Lagerring (6) aufliegt.

5. Maschine nach einem oder mehreren der Ansprüche 1 bis 4, dadurch gekennzeichnet, dass der Aussendurchmesser des Verschlusskörpers (8) etwa dem 0,6 bis 1,2-fachen des Innenradius des Bottichs (2) entspricht.

6. Maschine nach Anspruch 2, dadurch gekennzeichnet, dass als Drehhubantrieb ein in einer Lagerbüchse (14) um die Drehachse (15) drehsowie axial verschiebbares, mit dem Tragarm verbundenes Führungs- und Lagerrohr (13) vorgesehen ist, an dessen oberen Ende die Kolbenstange (16) eines Druckmittelzylinders (10) angreift und in dessen unterem Bereich ein zunächst achsparalleler, nach oben hin in einen schräg ansteigenden Umfangsschlitz (18) übergehender Schlitz (17) vorgesehen ist, in den ein an der Lagerbüchse (14) befestigter Ansatz (19), insbesondere eine Führungsrolle, eingreift.

## Claims

1. A kneading and/or mixing machine for dough food or the like, consisting of a tub (2) driven in rotation about a vertical axis of rotation, a driven working tool (3) engaging in the tub and a discharge device for the finished contents of the tub, having a closing member (8) which can be moved, by means of a drive (10), out of a closed position into an open position in which it uncovers a central bottom opening (7) in the bottom (5) of the tub and which is constructed as part of the bottom of the tub and the outer edge of which is in sealing engagement with the edge of the bottom opening in the closed position, characterised in that the closing member (8) can be moved, by means of its drive (10), vertically downwards and then additionally into an end position in which it is free of overlapping with respect to the bottom opening, the closing member (8) being supported, for free rotation, by means of a bearing (12), on a supporting arm (11) which is movable by means of the drive (10), and the axis of the bearing coinciding with the axis of rotation (1) of the tub (2).

2. A machine as claimed in claim 1, characterised in that the supporting arm (11) is mounted on the lower end of a stationary rotary lifting drive having a vertical axis of rotation (15) situated outside the container (2).

3. A machine as claimed in claim 1 or 2, characterised in that a helical coil, which rotates about a vertical axis of rotation (4) parallel to the axis of rotation (1) of the tub (2) and the tub drive can be reversed to reverse the direction of rotation of the rotational movement of the tub.

4. A machine as claimed in any one of claims 1 to 3, characterised in that, in the region of its bottom (5), the tub (2) rests on a bearing ring (6) surrounding the bottom opening (7) with spacing.

5. A machine as claimed in any one of claims 1 to 4, characterised in that the outside diameter of the closing member (8) corresponds to about 0.6 to 1.2 times the inside radius of the tub (2).

6. A machine as claimed in claim 2, characterised in that a guide and bearing tube (13), which is rotationally and axially displaceable about the axis of rotation (15) in a bearing bush (14) and which is connected to the supporting arm, is provided as a rotary lifting drive on the upper end of which the piston rod (16) of a pressure-fluid cylinder (10) acts and in the lower region of which there is provided a slot (17) whicn is at first parallel to the axis and then changes over into a circumferential slot (18) which rises obliquely upwards and in which engages an attachment (19), particularly a guide roller, secured to the bearing bush (14).

## Revendications

1. Machine à pétrir et/ou à mélanger pour de la pâte, des denrées alimentaires ou des produits analogues, composée d'une cuve tournante (2) entraînée en rotation autour d'un axe vertical, d'un outil de travail (3) entraîné qui travaille dans cette cuve et d'un dispositif d'évacuation pour le contenu de la cuve dont la préparation est terminée, comprenant un corps obturateur (8) qui peut être déplacé au moyen d'un mécanisme d'entraînement (10) à partir d'une position de fermeture vers une position d'ouverture, dans laquelle il démasque un orifice central (7) dans le fond (5) de la cuve, ce corps obturateur ayant la forme d'une partie du fond de la cuve et étant en contact étanche, dans sa position de fermeture, par son bord extérieur avec le bord de l'orifice de fond, caractérisée en ce que le corps obturateur (8) est mobile à l'intervention de son mécanisme d'entraînement (10) verticalement vers le bas, puis vers une position finale exempte de chevauchement par rapport à l'orifice de fond, étant entendu que le corps obturateur (8) est supporté de manière à tourner librement sur un bras de support (11) mobile à l'intervention du mécanisme d'entraînement (10), l'axe de rotation du corps obturateur coïncidant avec l'axe de rotation (1) de la cuve (2).

2. Machine suivant la revendication 1, caractérisée en ce que le bras de support (11) est monté à l'extrémité inférieure d'un mécanisme d'entraînement fixe assurant une élévation et une rotation présentant un axe de rotation vertical (15) disposé à l'extérieur du récipient (2).

3. Machine suivant la revendication 1 ou 2, caractérisée en ce qu'à titre d'outil de travail (3), une spirale tournant autour d'un axe de rotation vertical (4) parallèle à l'axe de rotation (1) de la cuve (2) est prévue d'une manière bien connue, le mécanisme d'entraînement de la cuve pouvant être commuté pour inverser le sens de rotation du mouvement circonférentiel de la cuve.

4. Machine suivant l'une quelconque des revendications 1 à 3, caractérisée en ce que la cuve (2) est posée dans le domaine de son fond (5) sur un anneau de roulement (6) entourant l'orifice de fond (7) à une certaine distance.

5. Machine suivant l'une quelconque des revendications 1 à 4, caractérisée en ce que le diamètre extérieur du corps obturateur (8) correspond à environ 0,6 à 1,2 fois le diamètre intérieur de la cuve (2).

6. Machine suivant la revendication 2, caractérisée en ce qu'à titre de mécanisme d'entraînement en rotation et en élévation est prévu un tube de quidage et de tourillonnement (13) relié au bras de support et monté dans une douille de palier (14) à coulissement axial et en rotation autour de l'axe de rotation (15), à l'extrémité supérieure duquel agit la tige de piston (16) d'un vérin à fluide sous pression (10) et dans la zone inférieure duquel est prévue une boutonnière (17) tout d'abord parallèle à l'axe et se prolongeant vers le haut en une boutonnière périphérique (18) s'élevant obliquement, dans laquelle s'engage und saillie (19) fixée à la douille de palier (14).

Fig. 1

Fig. 2

*Fig. 3*